# EUROPEAN PATENT SPECIFICATION

(11) **EP 3 265 620 B1**
(45) Date of publication and mention of the grant of the patent: **12.01.2022**
(21) Application number: 16717832.6
(22) Date of filing: 02.03.2016
(51) Int. Cl.: E03F 7/04, A01M 27/00, A01M 31/00, E03F 7/06

(54) **COMBINED VALVE AND RAT KILLER**
KOMBINATION AUS VENTIL UND RATTEN-KILLER
CLAPET ET DISPOSITIF D'EXTERMINATION DE RATS COMBINÉS

(30) Priority: 03.03.2015 DK 201500121
(43) Date of publication of application: 10.01.2018
(73) Proprietor: Damgaard Jensen Karen, Elisabeth, Laval, Quebec PQ. H7P 4M9 (CA)
(72) Inventor: DAMGAARD JENSEN, Karl Johan, 5210 Odense NV (DK)
(74) Representative: Larsen & Birkeholm A/S
(86) International application number: PCT/DK2016/000007
(87) International publication number: WO 2016/138902

(56) References cited:
- WO-A2-2006/105983
- DE-C1- 19 757 743
- FR-A- 1 595 231
- US-A- 1 327 278

## Description

The invention relates to a device in the form of a combined valve and rat killer for fitting to a pipe such as a sewer pipe, wherein the valve is a swinging valve, which, when connected to the pipe, is a non-return valve and in use, in a passive position is open for continuous flow through the pipe and in active position is in a down-swung closed position, where the valve blocks back-flow.

Along with increased volumes of rainwater, which are characterised by large amounts over a short period of time, the problem of overloaded sewer pipes and resulting damages and nuisance to buildings and surrounding grounds, such as roads and the like, is increasing.

For drainage of this so-called flood and/or back-flow, valve-like devices are known which include, for example, spherical floating bodies, which in the event of rising water will move upwards toward a valve seat in the drain. Most commonly used is a non-return flap where the flap follows the flow of water. All parts are in direct contact with sewage and therefore exposed to deposits which will eventually lead to problems such as lower flow and problems with leakage. This is being remedied with annual inspections and possible cleaning, and will after a few years be inoperative, because the amount of dirt deposited on the flap will cause the flap to malfunction and leak.

DE 197 57 743 C1 relates to a non-return valve preventing back flow of drain water into a pipe. The non-return valve has a back-flow detector with a drive lock adjuster (50) actuated by the detector. A drive closure (40) is placed in a first position when back flow occurs and is movable into a second position when drain water is discharged from the pipe. The emergency closure (70) is movable by the adjuster to a third operational position, in which discharge of drain water is possible, if no back flow occurs, and is moved by self-adjustment into a closed position by the discharge. The non-return valve is not combined with a rat-killing feature.

FR 1595231 A relates to a non-return valve comprising a seat and a shutter (14) pivoting on an axis. The shutter is secured to a float of such weight that it develops a pivoting moment maintaining the shutter open for a normal flow, and of a volume such that it ensures closing of the shutter when the liquid level in the sewer reaches a determined maximum level. The non-return valve is not combined with a rat-killing feature.

US 1327278 A relates to device for protection of drains comprising a shutter having two positions. The shutter prevents small animals from entering the drain and allows water to flow out, however, the device does not comprise a non-return valve.

Over the years attempts have been made to limit the number of sewer rats using electrical or mechanical traps and poison but so far without satisfactory results, either because the water flow through the pipe or the sewer pipe is reduced or due to inaccuracy when serving as a rat killer.

### Objective of the invention

The objective of the invention is to remedy these shortcomings and inconveniences in known non-return valves and rat traps and this is achieved according to the invention by a device in the form of a combined valve and rat killer for fitting to a pipe such as a sewer pipe, wherein the valve is a swinging valve, which, when connected to the pipe, is a non-return valve. When in use, the valve in a passive position is open for continuous flow through the pipe and in an active position is in a down-swung, closed position, where the valve blocks back-flow. In use the valve (2) is pivotably mounted (8) at the top of the pipe (1). The device also comprises an actuator (7), which is connected to the valve (2) with a reciprocating manoeuvre rod (6) for swinging the valve (2) between the open and the down-swung closed position, and on an inner side near its lower end the valve (2) is fitted with a projection (2a) with a cross section that sharpens towards an edge.

According to an embodiment of the invention, the valve (2) may be fitted with an encircling seal (11) for sealing and shock-absorbing of the valve's impact against the end of the pipe.

According to an embodiment of the invention, the actuator (7) may be an electrically driven voice-coil linear motor set to a uniform motion speed, a variable motion speed and/or a vibrating motion.

According to an embodiment of the invention, the actuator (7) may be controlled by one or more sensors mounted in the pipe (1, 1a). The controlling of the actuator may include signalling to the actuator (7) on slow and partial down-swinging of the valve (2) for when a rat (12) is in position, in a single blow to swing down the valve (2). In the event of power failure, the actuator (7) may disconnect and thus ensure that the valve (2) can swing freely and continue to serve as a non-return valve. After each down-swinging of the valve (2) the actuator (7) may raise to a position allowing free flow (A) through the pipe (1, 1a).

In this surprisingly simple way, the valve will serve as a closing valve, which in normal mode, will be raised for free flow through the pipe and in the event of back-flow will be pressed against the pipe wall and thus block the back-flow while, at the same time, a rat will be killed by the valve when it with great speed and force is swung down against the lower wall of the pipe.

As the valve will normally be in an open, i.e. up-swung position, any dirt will be washed away ensuring the function as valve, and there will be a close seal of the back-flow as the water presses against the valve and thereby presses it against the pipe wall and thereby ensures that it is tightly sealed.

When using the actuator, which can be activated momentarily, the valve may serve as a rat trap as the lower edge of the valve will be able to break the neck/back of a rat when it is located under the valve.

### The drawings

The drawings show the following:
- figure 1: shows a sectional drawing of a device comprising a non-return valve, which device helps to understand the invention, but does not show it,
- figure 2: shows a section of the valve of fig. 1 in its down-swung closed position,
- figure 3: shows a sectional drawing of an embodiment of a device according to the invention, and
- figures 4 and 5: show the device of fig. 3 serving as a rat killer.

### Description of the examples of embodiments

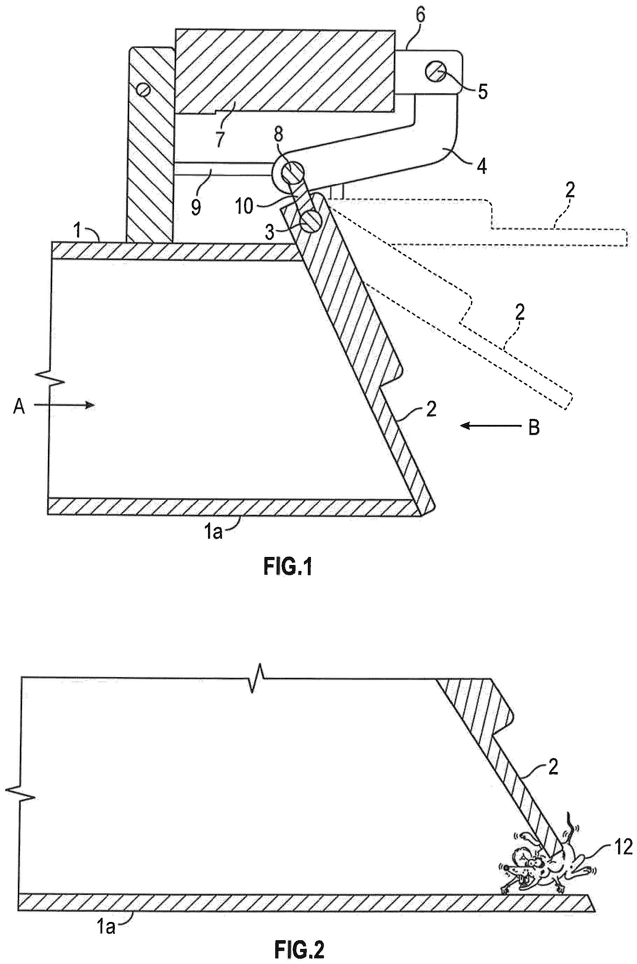

The embodiment of figs. 1 and 2 illustrates background art useful for understanding the invention. Figure 1 shows a non-return valve mounted on a pipe 1, 1a and a valve 2 serving as a seal in the event of back-flow B through the pipe.

For movement of the valve 2, there is on top of the pipe 1 mounted an actuator 7 with a manoeuvre rod 6, which is movable in a longitudinal direction.

To the rod 6 is mounted at 5 to an arm 4, which again is mounted at 8 to a stationary arm 9.

To the arm 4 is attached an additional arm 10, which is attached to the valve 2 in a fitting aperture 3.

By activating the actuator 7, the valve 2 will thus be able to swing from the punctured open position to the down-swung closed position where the water in the flow direction B will be blocked. This is done by the valve 2 abutting the bottom/end of the pipe.

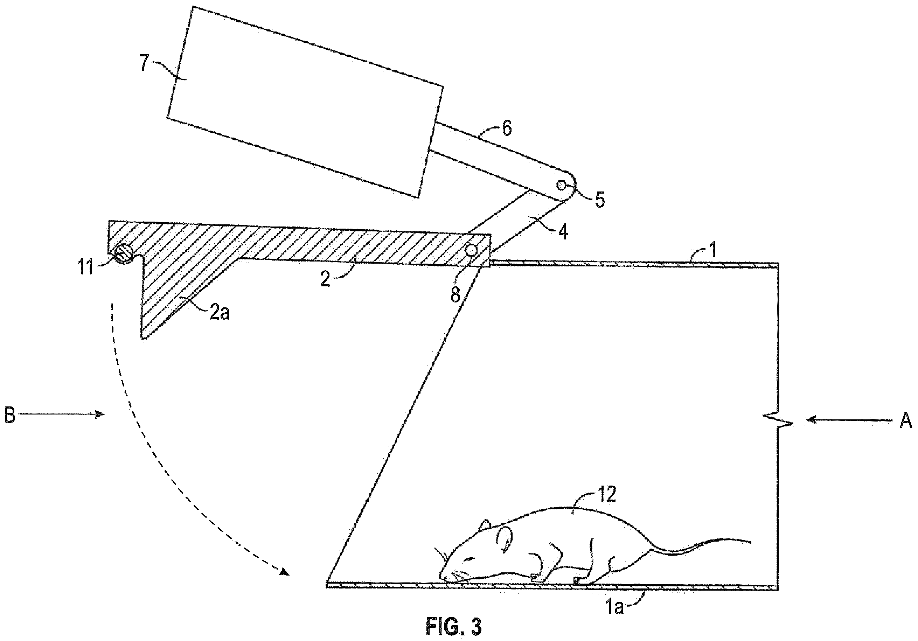

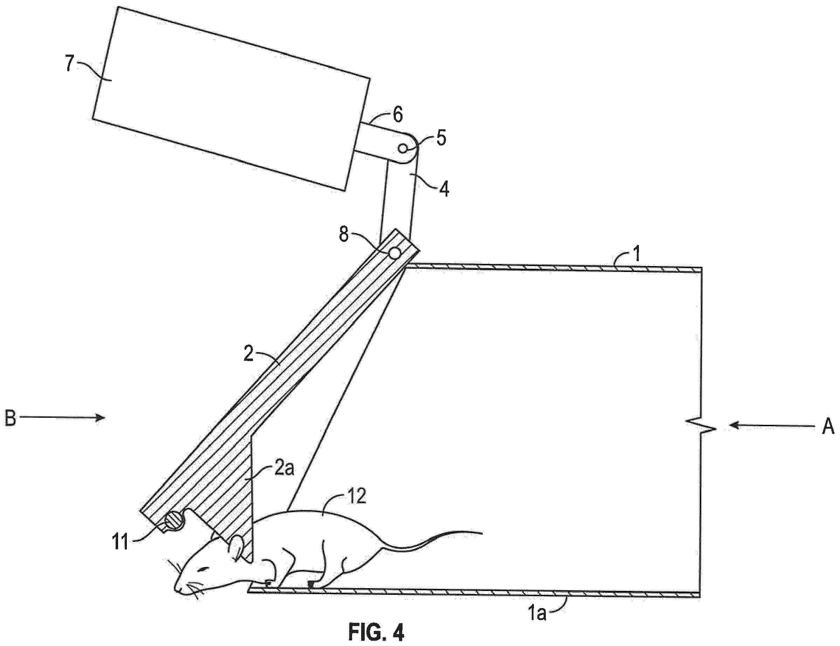

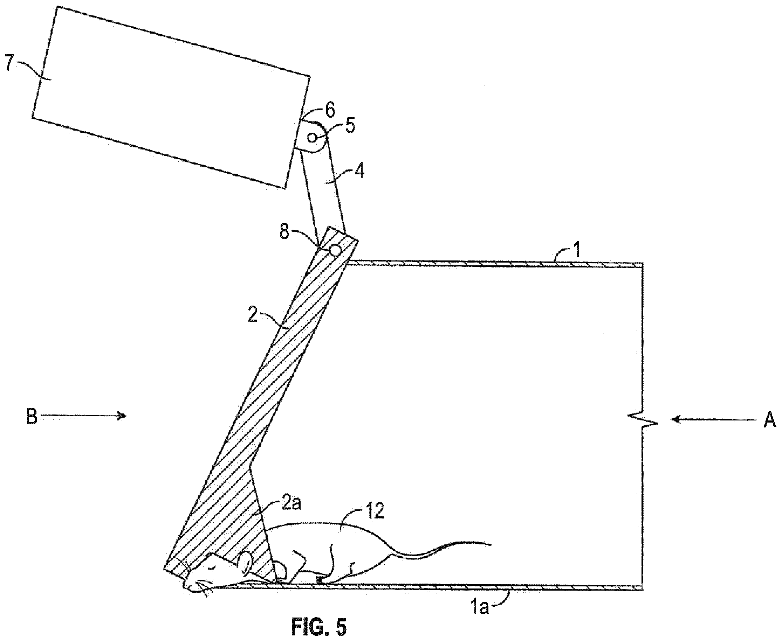

An embodiment of the invention is shown in figures 3-5. This embodiment comprises an actuator 7, which is mounted on top of the pipe 1. The motion mechanism is simplified by a fixed angular arm 4 between the manoeuvre rod 6 of the actuator 7 and the valve 2.

The valve is fitted with an internally extending projection 2a, said projection 2a having an approximate triangular cross section shape ending with a sharp or pointed edge.

Furthermore, is shown a seal 11, extending around the side edge of the valve and ensuring a close-fitted installation towards the end of the pipe in the event of back-flow B.

The actuator 7 of this embodiment is preferably an electrical voice-coil linear motor, which is characterized by a considerable motion speed, possibility for adjustment of said speed and, also, the actuator 7 can provide the valve 2 with a vibrating motion, which has proved a highly efficient way to kill a rat, as the many successive blows guarantee an efficient and humane killing.

The projection 2a ensures, besides being an impact device, that the rat is trapped effectively during the killing and without possibility of escape.

Sensors, not shown, in the piping system may signal the actuator 7, when a rat 12 approaches, so that the valve 2 can start a slow down-swing for when the rat is in position to swing the valve down with great speed and force.

This has been found to give a high degree of accuracy and this, combined with the self-cleaning construction, results in the device being virtually maintenance-free and well-functioning as the device only uses simple and plain mechanical elements and which are placed outside the extent of the sewage water.

## Claims

1. Device in the form of a combined valve (2) and rat killer (2a) for fitting to a pipe such as a sewer pipe, wherein the valve (2) is swinging valve (2), which, when connected to the pipe (1, 1a), is a non-return valve and in use in a passive position is open for continuous flow through the pipe and in an active position is in a down-swung closed position, where the valve blocks back-flow, in use the valve (2) is pivotably mounted (8) at the top of the pipe (1, 1a), the device also comprises an actuator (7), which is connected to the valve (2) with a reciprocating manoeuvre rod (6) for swinging the valve (2) between the open and the down-swung closed position, **characterized in that** the valve (2) on an inner side near its lower end is fitted with a projection (2a) with a cross section that sharpens towards an edge.

2. Device according to claim 1, **characterized in that** the valve (2) is further fitted with an encircling seal (11) for sealing and shock-absorbing of the valve's (2) impact against an end of the pipe.

3. Device according to claim 1 or 2, **characterized in that** the actuator (7) is an electrically driven voice-coil linear motor, which can be set to a uniform motion speed, a variable motion speed and/or a vibrating motion.

4. Device according to claims 1-3, **characterized in that** the actuator (7) is controlled by a, in the pipe (1, 1a), mounted sensor/ sensors.

5. Device according to claim 4, **characterized in that** the controlling of the actuator (7) includes signalling to the actuator (7) on slow and partial down-swinging of the valve (2) for when a rat (12) is in position, in a single blow to swing down the valve (2).

6. Device according to claims 4-5, **characterized in that** the actuator (7), in the event of power failure, will disconnect and thus ensure that the valve (2) can swing freely and thereby serve as a non-return valve.

7. Device according to claims 1-6, **characterized in that** the actuator (7) after each down-swinging of the valve (2) will raise the valve (2) to allow a free flow (A) through the pipe (1, 1a).

## Patentansprüche

1. Vorrichtung in Form einer Kombination aus Ventil (2) und Ratten-Killer (2a) zur Ausstattung an einem Rohr, wie etwa einem Kanalrohr, wobei das Ventil (2)ein schwingendes Ventil (2) ist, das, wenn es mit dem Rohr (1, 1a) verbunden ist, ein Rückschlagventil ist und im Einsatz in einer passiven Position für einen kontinuierlichen Durchfluss durch das Rohr offen ist und in einer aktiven Position in einer nach unten geschwungenen, geschlossenen Position ist, wobei die Klappe einen Rückfluss blockiert, wobei die Klappe (2) im Einsatz an der Oberseite des Rohrs (1, 1a) schwenkbar montiert (8) ist, wobei die Vorrichtung zudem einen Aktor (7) umfasst, der mit einer sich hin- und herbewegenden Stange (6) mit der Klappe (2) verbunden ist, um die Klappe (2) zwischen der offenen und der nach unten geschwungenen, geschlossenen Position zu schwingen, **dadurch gekennzeichnet, dass** die Klappe (2) an einer Innenseite nahe ihrem unteren Ende mit einem Vorsprung (2a) mit einem Querschnitt, der sich in Richtung einer Kante zuspitzt, ausgestattet ist.

2. Vorrichtung nach Anspruch 1, **dadurch gekennzeichnet, dass** die Klappe (2) ferner mit einer umschließenden Dichtung (11) ausgestattet ist, um einen Aufprall der Klappe (2) gegen ein Ende des Rohrs abzudichten und zu dämpfen.

3. Vorrichtung nach Anspruch 1 oder 2, **dadurch gekennzeichnet, dass** der Aktor (7) ein elektrisch angetriebener linearer Schwingspulenmotor ist, der auf eine gleichmäßige Bewegungsgeschwindigkeit, eine variable Bewegungsgeschwindigkeit und/oder eine vibrierende Bewegung einstellt sein kann.

4. Vorrichtung nach Ansprüchen 1-3, **dadurch gekennzeichnet, dass** der Aktor (7) durch einen oder mehrere in dem Rohr (1, 1a) montierte Sensoren gesteuert wird.

5. Vorrichtung nach Anspruch 4, **dadurch gekennzeichnet, dass** das Steuern des Aktors (7) Signalisieren des Aktors (7) auf langsam und Schwingen der Klappe (2) teilweise nach unten beinhaltet, wenn eine Ratte (12) in Position ist, mit einem einzelnen Schlag, um die Klappe (2) nach unten zu schwingen.

6. Vorrichtung nach Ansprüchen 4-5, **dadurch gekennzeichnet, dass** der Aktor (7) im Falle eines Stromausfalls getrennt wird und somit sicherstellt, dass die Klappe (2) frei schwingen kann und somit als ein Rückschlagventil dient.

7. Vorrichtung nach Ansprüchen 1-6, **dadurch gekennzeichnet, dass** der Aktor (7) nach dem Schwenken der Klappe (2) nach unten die Klappe (2) anhebt, um einen freien Durchfluss (A) durch das Rohr (1, 1a) zu ermöglichen.

## Revendications

1. Dispositif sous la forme d'un clapet (2) et dispositif d'extermination de rats (2a) combinés pour montage d'un tuyau tel qu'un tuyau d'égout, dans lequel le clapet (2) est un clapet à battant (2) qui, lorsqu'il est relié au tuyau (1, 1a) est un clapet antiretur et en utilisation en position passive, est ouvert pour un écoulement continu à travers le tuyau et en position active est en position fermée rabattue, où le clapet bloque le reflux, en utilisation le clapet (2) est monté de façon pivotante (8) au sommet du tuyau (1, 1a), le dispositif comprend également un actionneur (7), qui est relié au clapet (2) avec une tige de manœuvre alternative (6) pour faire basculer le clapet (2) entre la position ouverte et la position fermée rabattue, **caractérisé en ce que** le clapet (2) sur un côté intérieur proche de son extrémité inférieure est monté avec une saillie (2a) avec une section transversale qui s'affûte vers un bord.

2. Dispositif selon la revendication 1, **caractérisé en ce que** le clapet (2) est en outre équipé d'un joint périphérique (11) pour assurer l'étanchéité et l'amortissement de l'impact du clapet (2) contre une extrémité du tuyau.

3. Dispositif selon la revendication 1 ou 2, **caractérisé en ce que** l'actionneur (7) est un moteur linéaire à bobine acoustique entraîné électriquement, qui peut être réglé sur une vitesse de mouvement uniforme, une vitesse de mouvement variable et/ou un mouvement vibrant.

4. Dispositif selon les revendications 1 à 3, **caractérisé en ce que** l'actionneur (7) est commandé par un capteur/des capteurs montés dans le tuyau (1, 1a).

5. Dispositif selon la revendication 4, **caractérisé en ce que** la commande de l'actionneur (7) comporte le signalement à l'actionneur (7) du rabattement lent et partiel du clapet (2) lorsqu'un rat (12) est en position, en un seul coup pour rabattre le clapet (2).

6. Dispositif selon les revendications 4 à 5, **caractérisé en ce que** l'actionneur (7), en cas de panne de courant, se déconnecte et garantit ainsi que le clapet (2) peut pivoter librement et ainsi servir de clapet antiretour.

7. Dispositif selon les revendications 1 à 6, **caractérisé en ce que** l'actionneur (7) après chaque rabattement du clapet (2) soulève le clapet (2) pour permettre un écoulement libre (A) à travers le tuyau (1, 1a).
